(19) **Europäisches Patentamt / European Patent Office / Office européen des brevets**

(11) **EP 1 970 815 A1**

(12) **EUROPEAN PATENT APPLICATION**

(43) Date of publication:
**17.09.2008 Bulletin 2008/38**

(51) Int Cl.:
**G06F 13/16** (2006.01)

(21) Application number: **08002884.8**

(22) Date of filing: **15.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **16.03.2007 JP 2007069510**

(71) Applicant: **FUJITSU LIMITED**
**Kawasaki-shi,**
**Kanagawa 211-8588 (JP)**

(72) Inventors:
• **Sato, Fuyuta**
**Fukuoka-shi**
**Fukuoka 814-8588 (JP)**
• **Furuta, Masayuki**
**Fukuoka-shi**
**Fukuoka 814-8588 (JP)**

(74) Representative: **HOFFMANN EITLE**
**Patent- und Rechtsanwälte**
**Arabellastrasse 4**
**81925 München (DE)**

(54) **Data transfering apparatus and information processing system**

(57) A data transferring unit performs hit determination on a cache memory based on a management table and a request from a CPU board. If requested data is not available in the cache memory, the data transferring unit reads and sequentially transfers the requested data from a shared memory in packets of optimum packet length stored in a time table in such a way that the previous packet is transferred while the next packet is read. In addition, the data transferring unit measures a packet transfer time. A packet-length optimizing unit varies, based on the packet transfer time calculated by the data transferring unit and data stored in the time table, an optimum packet length so that the difference between the packet transfer time and a packet read time is minimized.

FIG.2

**Description**

BACKGROUND OF THE INVENTION

1. Field of the Invention

The present invention relates to data transfer in data processing, and, more particularly to a data transferring apparatus that reads and transfers requested data from a storage unit in a multi processor system, and an information processing system.

2. Description of the Related Art

Recent years have seen increased volumes of data such as audio and video data and there is a perpetual endeavor to find a fast way of handling and processing such vast volumes of data. The result of one such endeavor is a multi processor information processing system that includes a plurality of central processing unit (CPU) boards, each CPU board carrying a CPU and performing intended processes, and a memory board carrying a shared memory and connected to the CPU boards by a common bus and accessible by each CPU.

In such multi processor information processing systems, when a CPU accesses the shared memory, the CPU board carrying the CPU owns exclusive rights over the common bus. Consequently, the other CPU boards go into a wait state until the time they own exclusive rights over the common bus, resulting in a drop in the processing power of the system.

Several methods have been proposed to prevent the drop in the processing power. For example, a bus control method is proposed in Japanese Patent Application Laid-open No. H7-225737, in which bus load characteristics determined based on data transfer volume is estimated by determining whether the ratio of sequential access is high or that of random access is high based on the input/output request issued by a central control device to the storage device, the data transfer volume is varied by automatically tuning a data transfer performance oriented bus usage method or a random access performance oriented bus usage method.

A data transfer amount adjustable processor is proposed in Japanese Patent Application Laid-open No. H7-282023, that determines whether the data to be accessed is in the distributed memory of the processor or in the distributed memory of another processor, and based on the outcome of the determination, varies the transfer volume of the accessed data. In other words, the data transfer amount adjustable processor varies the data transfer volume so that the data transfer volume directed to the transfer bus is less than the data transfer volume directed to the memory bus.

In the technology disclosed in Japanese Patent Application Laid-open No. H7-225737, as the data transfer performance oriented bus usage method or the random access performance oriented bus usage method is automatically tuned according to the data transfer volume, even if the operating conditions change, the bus is efficiently utilized and the processing power of the system can be enhanced.

In the technology disclosed in Japanese Patent Application Laid-open No. H7-282023, the period of utilization of the transfer bus for one cycle is shortened, thus reducing the usage rate of the transfer bus. Consequently, the entire system can realize high-speed processing, enhancing the processing power of the system.

Let us describe what happens when a single data transfer takes place. In a multi processor information processing system, the time taken for transferring data read from the shared memory to the requesting CPU board varies according to the process congestion of each CPU board. Therefore, when data is transferred in packets of fixed length in a single data transfer cycle by exclusive use of the bus by a CPU board, a request to access the shared memory from another CPU board has an inordinately long waiting period, thereby increasing the data transfer time.

However, in the technologies described above, the time required for reading the data from the memory and the transfer time of the data cannot be shortened as the packet transferred in a single data transfer (that is, data transfer corresponding to a single access request) is of fixed length. Consequently, it is not possible to shorten the waiting period for the exclusive right to the bus, which varies according to the process congestion in the requesting CPU board, and prevent increase in the data transfer duration.

SUMMARY OF THE INVENTION

It is an object of the present invention to at least partially solve the problems in the conventional technology.

According to an aspect of the present invention, a data transferring apparatus connected to a plurality of processing modules by a bus includes a storage unit that stores therein data required by the processing modules; and a control unit that, upon receiving a request of data from one of the processing modules, reads the requested data from the storage unit in packets each having an optimum packet length and sequentially transfers the packets in such a way that the previous packet is transferred while the next packet is read, the control unit setting the optimum packet length based on a packet transfer time.

According to another aspect of the present invention, an information processing system includes a plurality of processing modules each performing various processes; and a data transferring apparatus that includes a storage unit that stores therein data required by the processing modules, and is connected to the processing modules. The data transferring apparatus further includes a control unit that, upon receiving a request of data from one of the processing modules, reads the requested data from the storage unit in packets each having an optimum packet length and sequentially transfers the packets in such a way that the previous packet is transferred while the next packet is read, the control unit setting the optimum packet length based on a packet transfer time.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

Fig. 1 is a schematic for explaining data transfer and packet length optimization performed by a data transferring apparatus according to the present invention;

Fig. 2 is a drawing of a configuration of an information processing system to which the data transferring apparatus according to the present invention is applied;

Fig. 3 is a flowchart of a data transfer process;

Fig. 4 is a flowchart of a packet length optimization process;

Fig. 5 is a drawing of a configuration of a conventional information processing system;

Fig. 6 is a schematic for explaining the functioning of the conventional information processing system;

Fig. 7 is a schematic for explaining the functioning of the information processing system according to the present invention; and

Fig. 8 is a schematic for comparing a processing time of the conventional information processing system and the information processing system according to the present invention.

DETAILED DESCRIPTION OF THE PREFERRED EMBODIMENTS

Exemplary embodiments of the data transferring apparatus and the information processing system according to the present invention are described below with reference to the accompanying drawings.

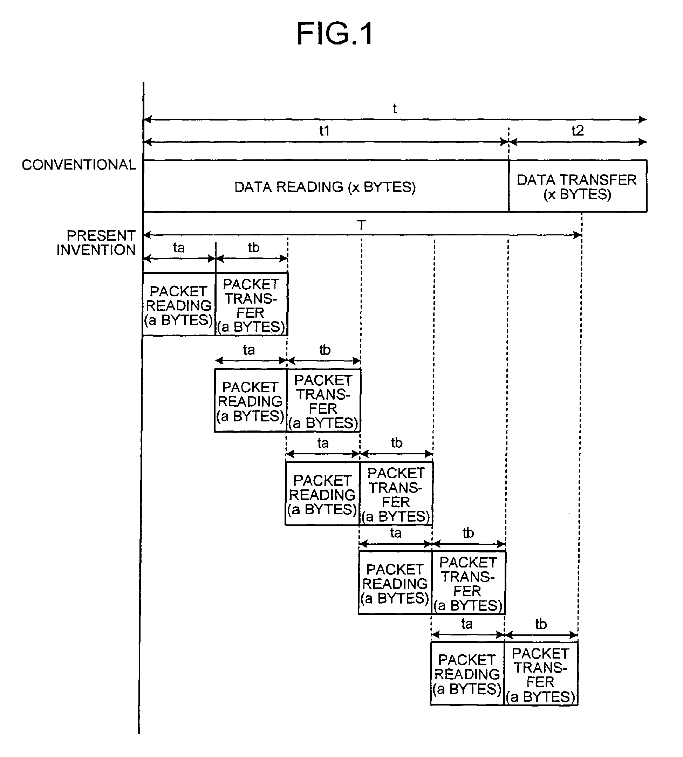

An embodiment of the data transferring apparatus according to the present invention is described below with reference to Figs. 1 to 8. Fig. 1 is a schematic for explaining data transfer and packet length optimization performed by the data transferring apparatus according to the present invention. In conventional data transfer involving reading data of x bytes (where x is a positive integer) from the memory and transferring the read data, the data transferring apparatus first reads the data of x bytes from the memory and the transfers the read data. Thus, if t1 is the data read time for data of x bytes and t2 is the data transfer time for data of x bytes, the total time for data reading and data transfer amounts to t1+t2.

On the contrary, the data transferring apparatus according to the present invention does not read the all x bytes of the transfer data in one go, and instead, breaks up the data into packets of 'a' bytes (where 'a' is a positive integer less than or equal to x), reads and transfers the data in units of packets of 'a' bytes, transferring one packet while reading the next. In other words, the data transferring apparatus performs parallel processes of reading and transfer of packets.

If the time required for reading a packet of 'a' bytes from the memory is ta, and the transfer time of the packet is tb, the total time T for data reading and data transfer when data read time ta is longer than packet transfer time tb can be expressed by Expression (1) and when data read time ta is shorter than the packet transfer time tb can be expressed by Expression (2) given below.

$$T = (ta \times packet\ transfer\ count) + tb \qquad (1)$$

$$T = ta + (tb \times packet\ transfer\ count) \qquad (2)$$

Thus, the total time T for reading and transferring the data can be obtained by multiplying the longer of the data read time ta and the packet transfer time tb with the packet transfer count and adding to the result the shorter of the data read time ta and the packet transfer time tb. Therefore, the shortest total time T can be obtained if the data read time ta is of the same duration as the packet transfer time tb. The data transferring apparatus according to the present invention thus optimizes the packet length by changing the packet length so that the packet read time and the packet transfer time are of the same duration or are approximated.

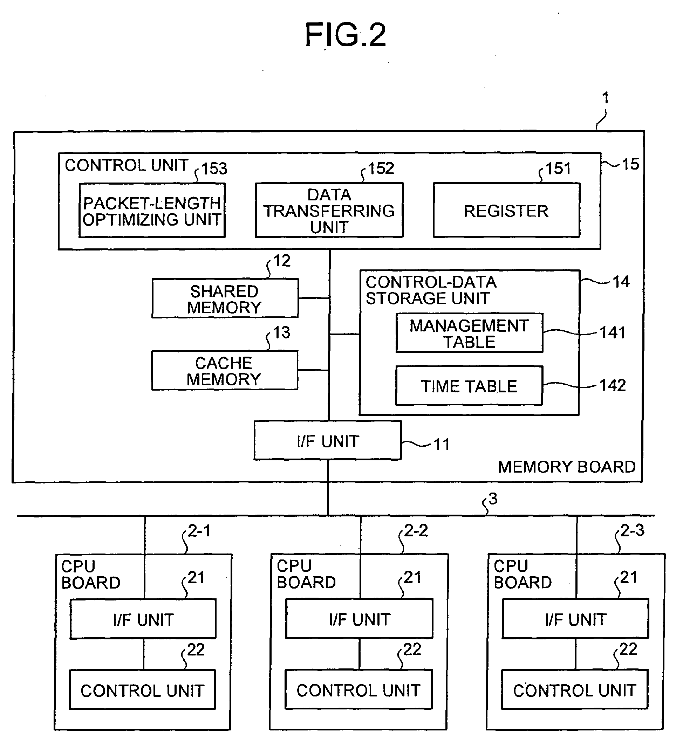

Fig. 2 is a drawing of a configuration of an information processing system to which the data transferring apparatus according to the present invention is applied. The information processing system shown in Fig. 2 includes a memory board 1 that serves as the data transferring apparatus, and a plurality of CPU boards 2-1 to 2-3, all of which are connected to one another by a bus 3.

The memory board 1 includes an interface unit (hereinafter, "I/F unit") 11, a shared memory 12, a cache memory 13, a control-data storage unit 14, and a control unit 15.

The I/F unit 11 connects the memory board 1 with the CPU boards 2-1 to 2-3 via the bus 3. The shared memory 12 stores therein data required for the various processes of the CPU boards 2-1 to 2-3. The cache memory 13 stores therein part of the data stored in the shared memory 12.

The control-data storage unit 14 stores therein control data required for controlling reading and transfer of the data stored in the shared memory 12 and the cache memory 13, and includes a management table 141 and a time table 142. The management table 141 contains data such as memory address indicating the storage location and status of the data stored in the shared memory 12, and memory addresses indicating the storage location and status of the data stored in the cache memory 13. The data in the cache memory 13 can be stored separately for each of the CPU boards 2-1 to 2-3.

The time table 142 contains data required for optimization of packet length and transfer of packets. Specifically, the time table 142 contains the fields packet read time, packet transfer time, total time (data read time and transfer time), past cumulative time, optimum packet length, and packet transfer count.

The time required for reading the data of packet length from the shared memory 12 is stored in the field packet read time. The time required for transferring the data of packet length from the shared memory 12 to the CPU boards 2-1 to 2-3 is stored in the field packet transfer time. The total time beginning from reading the first packet of the requested data from the shared memory 12 till the transfer of the last packet to the CPU boards 2-1 to 2-3 is stored in the field total time. Past cumulative time is stored in the field past cumulative time. The current optimized packet length is stored in the field optimized packet length. The number of packet transfers required to transfer the requested data in units of packets, that is, data length/packet length, is stored in the field packet transfer count.

The packet read time, the packet transfer time, the total time, and the past cumulative time are stored in associated form for a plurality of preset packet lengths in the time table 142. The packet lengths are calculated by dividing the data length of the requested data by a preset constant m (where $1 < m$, and m is an integer), the actual data length being taken as a maximum packet length. Specifically, if the constant m is 2, and the maximum packet length is 512 bytes, the packet lengths would be 512 bytes, 256 bytes, 128 bytes, 64 bytes, and so on. The packet read time, the packet transfer time, the total time, and the past cumulative time for each of these packet lengths are stored in the time table 142.

The values in the fields in the management table 141 and the time table 142 are already set when the system is initialized or reset. However, the values can also be preset by the system administrator using a not shown input unit.

Based on the management table 141 and the time table 142, the control unit 15 accesses the shared memory 12 or the cache memory 13 in response to an access command (data write request or data read request) from the CPU boards 2-1 to 2-3, reads data from or writes data to the shared memory 12 or the cache memory 13, and performs data transfer. The control unit 15 performs a packet length optimization process when performing data transfer.

The control unit 15 includes a register 151, a data transferring unit 152, and a packet-length optimizing unit 153. The register 151 is of first-in-first-out (FIFO) type, and keeps the access commands from the CPU boards 2-1 to 2-3.

The data transferring unit 152 sequentially executes the commands kept in the register 151. If the command is a data read request, the data transferring unit 152 determines, based on the management table 141, as to whether the data is to be read from the shared memory 12 or the cache memory 13. If data is to be read from the shared memory 12, the data transferring unit 152 reads data equivalent to an optimum packet length stored in the time table 142, and transfers the packet, performing reading of one packet and transferring of the previously read packet side by side. If data is to be read from the cache memory 13, the data transferring unit 152 reads the data of data length of the requested data from the cache memory 13, and transfers the read data to the CPU boards 2-1 to 2-3.

The packet-length optimizing unit 153 optimizes the packet length based on the current packet transfer time in which the data transferring unit 152 is transferring the packets and the management table 141, so that the difference between the read time of the packet from the shared memory 12 and the packet transfer time can be minimized.

Each of the CPU boards 2-1 to 2-3 is a processing device that performs intended processes, and includes a control unit 22 and an I/F unit 21. The control unit 22 includes a not shown CPU and a not shown storage unit that stores therein programs that are executed by the CPU. The I/F unit 21 connects the CPU boards 2-1 to 2-3 to the memory board 1 via the bus 3.

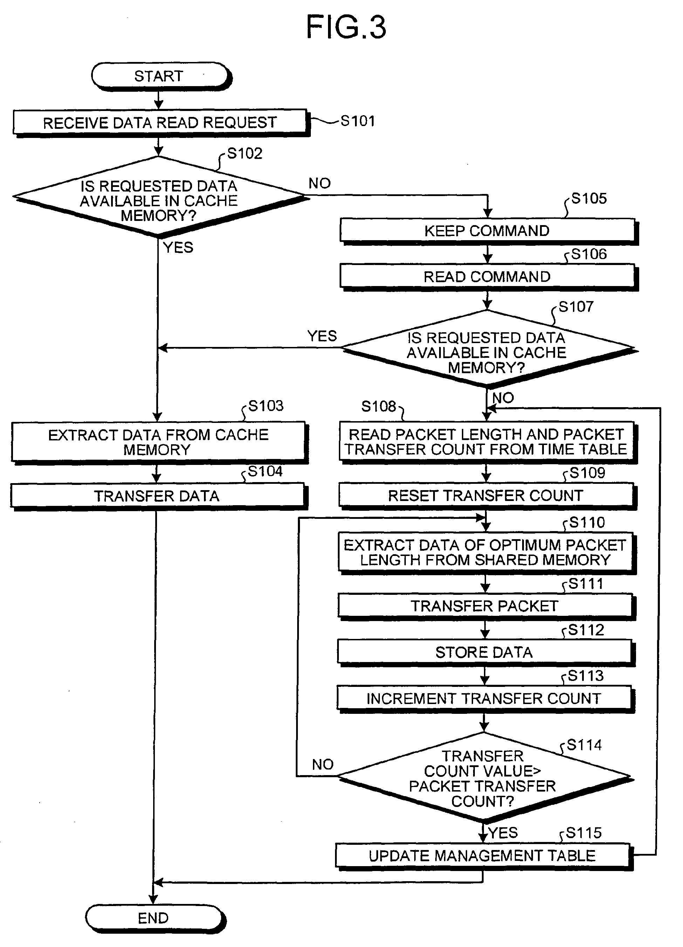

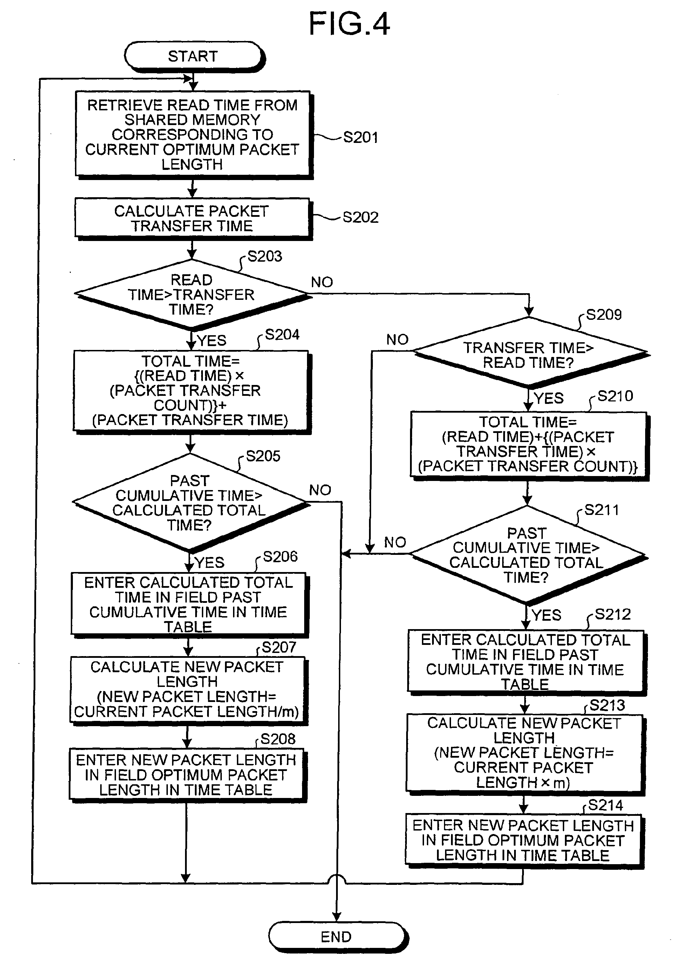

The functioning of the information processing system is explained below with reference to the flowcharts shown in Figs. 3 and 4. The salient features of the data transferring apparatus and the information processing system according to the invention pertain to how data is read from the shared memory 12 and transferred to the requesting CPU boards 2-1 to 2-3, and the packet length optimization when performing data transfer. However, when writing data from the CPU boards 2-1 to 2-3 to the shared memory 12 or the cache memory 13, the data transferring apparatus and the information processing system, the process is similar to any existing write process. Therefore, only the operation in response to a data read request from the CPU boards 2-1 to 2-3 to the memory board 1 is described here.

The data transferring apparatus according to the present invention performs the data transfer process and the packet length optimization process in response to a data read request. In the data transfer process, the data transferring apparatus reads the data requested by the CPU boards 2-1 to 2-3 from the shared memory 12 or the cache memory 13, and sends the data to the requesting CPU boards 2-1 to 2-3. In the packet length optimization process, optimizes the length of the packet when reading the data from the shared memory 12. Fig. 3 is a flowchart of the data transfer process.

To issue a request to access the data stored in the shared memory 12 of the memory board 1, the control unit 22 of the CPU boards 2-1 to 2-3 sends a data read request to the memory board 1 via the I/F unit 21. In the period the data read request is transferred from the CPU boards 2-1 to 2-3 to the memory board 1, the requesting CPU boards 2-1 to 2-3 exclusively owns the bus 3.

The data transferring unit 152 of the memory board 1 receives the data read request from the CPU boards 2-1 to 2-3 via the I/F unit 11 (step S101). The data transferring unit 152 determines, based on the data read request and the data stored in the management table 141, whether the requested data is stored in the cache memory 13 (step S102).

Specifically, by referring to the management table 141, the data transferring unit 152 is able to recognize the association between the data stored in the cache memory 13 and the address of that data in the shared memory 12, and the association between the requested data and the address of that data in the shared memory 12. The data transferring unit 152 determines whether the requested data is stored in the cache memory 13 (data is "hit"), by comparing the two addresses.

The data transferring unit 152 first perceives whether the data available in the cache memory 13 belongs to an address in a region ranging from an upper bound address to a lower bound address in the shared memory 12. If the entire region defined by the requested upper bound address to the lower bound address is included in the perceived region, the data transferring unit 152 surmises that it is hit, that is, the requested data is available in the cache memory 13. If the entire region defined by the requested upper bound address to the lower bound address is not included in the perceived region, the data transferring unit 152 surmises that the requested data is not available in the cache memory 13 (data is "mishit").

If the requested data is available in the cache memory 13 (Yes at step S102), the data transferring unit 152 extracts the data from the cache memory 13 (step S103), and sends the extracted data to the requesting CPU boards 2-1 to 2-3 via the I/F unit 11 (step S104). The bus 3 is freed when hit determination is being carried out upon receiving the data read request, and re-engaged by the requesting CPU boards 2-1 to 2-3 when the data is being transferred from the memory board 1 to the requesting CPU boards 2-1 to 2-3.

The control unit 22 of the requesting CPU boards 2-1 to 2-3 receives the data via the I/F unit 21 and performs processing according to the received data.

If the requested data is not available in the cache memory 13 (No at step S102), the data transferring unit 152 keeps the command corresponding to the data read request in the register 151 (step S105). The commands kept in the register 151 are read in the order in which they are kept and executed.

The data transferring unit 152 reads the command corresponding to the data read request stored in the register 151 (step S106), and determines again whether the requested data is available in the cache memory 13 (step S107). In other words, there is a possibility that data is stored from the shared memory 12 to the cache memory 13 in response to the command executed in the intervening time between the time the command is stored in the register 151 and read from the register 151. Therefore, hit determination is performed once again prior to command execution.

If the requested data is available in the cache memory 13 (Yes at step S107), the data transferring unit 152 extracts the requested data from the cache memory 13 (step S103) and sends the data to the requesting CPU boards 2-1 to 2-3 via the I/F unit 11 (step S104).

The control unit 22 of the requesting CPU boards 2-1 to 2-3 receives the data via the I/F unit 21 and performs processing according to the received data.

If the requested data is not available in the cache memory 13 (No at step S107), the data transferring unit 152 reads the optimum packet length and packet transfer count stored in the time table 142 (step S108). The data transferring unit 152 then resets the counter value (to "1") of a not shown transfer counter (step S109).

The data transferring unit 152 extracts the data of optimum packet length from the shared memory 12 (step S110). Specifically, the data transferring unit 152 determines the read address that indicates the beginning of the requested data to be read first and reads the data of optimum packet length from this read address. The data transferring unit 152 calculates the read address indicating the beginning of the data of the optimum length to be read next by adding the optimum packet length to or subtracting the optimum packet length from the read address, and takes the calculated read address indicating the beginning of the data as the next read address.

The data transferring unit 152 starts sending the packet length data (packets) to the requesting CPU boards 2-1 to 2-3 via the I/F unit 11 (step S111).

The data transferring unit 152, in addition to sending the packets, stores the packets in the cache memory 13 (step S112). The data transferring unit 152 increments the transfer counter (step S113) and compares the transfer count value and the packet transfer count (step S114). If the transfer count value is less than the packet transfer count (No at step S114), the data transferring unit 152 extracts, based on the read address, data of optimum packet length (packet) from the shared memory 12 (step S110).

The data transferring unit 152 then starts sending the extracted packet (step S111). From the second packet onwards, the data transferring unit 152 determines whether the previously extracted packet has been sent, and if not, waits until the pervious packet is sent before beginning the sending process of the currently extracted packet. In other words, from the extraction of second packet onwards, the data transferring unit 152 performs the packet extraction and the data writing process involving writing the packet being sent to the cache memory 13 at the same as when the previously extracted packet is being sent.

If the transfer count value is greater than the packet transfer count (Yes at step S114), the data transferring unit 152 takes it to indicate that the entire requested data has been sent, reflects the stored contents in the cache memory 13, and updates the management table 141 (step S115).

Fig. 4 is a flowchart of the packet length optimization process. The packet-length optimizing unit 153 performs the packet length optimization process during data transfer process wherein packet length data (packets are read from the shared memory 12 and transmitted.

The packet-length optimizing unit 153 retrieves from the time table 142 the read time required for reading the current optimum packet length from the shared memory 12 (step S201). Specifically, the packet-length optimizing unit 153 reads the packet length stored in the field optimum packet length of the time table 142, and reads the data read time (packet read time) stored in the field packet read time of the time table 142 associated with the packet length. For example, if the packet length stored in the field optimum packet length is 512 bytes, the packet-length optimizing unit 153 reads the packet read time associated with the packet length 512 bytes, and if the packet length is 256 bytes, reads the packet read time associated with 256 bytes.

The data transferring unit 152 that is performing the data transfer process measures the packet transfer time (step S202), and stores the measured packet transfer time associated with the packet length in the field optimum packet length. Specifically, the data transferring unit 152 measures the time from when the count value of the transfer counter shows the preset value till the time the transfer is completed, and stores the measured transfer time associated with the packet length in the field optimum packet length of the time table 142.

After the transfer time is stored in the field packet transfer time of the time table 142, the packet-length optimizing unit 153 reads the packet transfer time from the time table 142, and compares it with the packet read time retrieved at step S201 (step S203). If the packet read time is longer than the packet transfer time (Yes at step S203), the packet-length optimizing unit 153 proceeds to calculate the total time by Expression (1) given above (step S204). In other words, the packet-length optimizing unit 153 uses the packet transfer count stored in the time table 142, the packet read time associated with the packet length in the time table 142, and the packet transfer time in the expression "{(packet read time)×(packet transfer count)}+(packet transfer time)" to calculate the total time.

The packet-length optimizing unit 153 reads from the time table 142 the past cumulative time stored associated with the packet length stored in the field optimum packet length, and compares it with the calculated total time (step S205). If the past cumulative time is shorter than the calculated total time (No at step S205), the packet-length optimizing unit 153 surmises that in the past data reading and transfer was performed in the same time period as or in shorter time period than the current time period, and ends the process without updating the optimum packet length in the time table 142.

If the past cumulative time is longer than the calculated total time (Yes at step S205), the packet-length optimizing unit 153 surmises that the current data reading and transfer time period is shorter than in the past, and enters the calculated total time in the field past cumulative time associated with the packet length stored in the field optimum packet length of the time table 142 (step S206).

The packet-length optimizing unit 153 then proceeds to calculate a new packet length (step S207). Specifically, the packet-length optimizing unit 153 calculates the new packet length by dividing the current packet length by the preset constant m.

The packet-length optimizing unit 153 stores the freshly calculated packet length in the field optimum packet length of the time table 142 (step S208). The packet-length optimizing unit 153 then proceeds to calculate the packet transfer count for the freshly calculated packet length and stores it in the field packet transfer count of the time table 142, and returns to step S201.

If the packet read time is shorter than the packet transfer time (No at step S203), the packet-length optimizing unit 153 determines if the packet transfer time is longer than the packet read time (step S209). If the packet transfer time is shorter than packet read time (if the determination step of step S203 is taken into account, this would indicate that the packet transfer time is equal to packet read time), the packet-length optimizing unit 153 surmises that data transfer time is shortest for the current optimum packet length, and ends the process without updating the optimum packet length.

If the packet transfer time is longer than the packet read time, the packet-length optimizing unit 153 proceeds to calculate the total time by Expression (2) given above (step S210). In other words, the packet-length optimizing unit 153 uses the packet transfer count stored in the time table 142, the packet read time associated with the packet length in the time table 142, and the packet transfer time in the expression "{(packet read time)+{(packet transfer count)× (packet transfer time)}" to calculate the total time.

The packet-length optimizing unit 153 reads from the time table 142 the past cumulative time stored associated with the packet length stored in the field optimum packet length, and compares it with the calculated total time (step S211). If the past cumulative time is shorter than the calculated total time (No at step S211), the packet-length optimizing unit 153 surmises that in the past data reading and transfer was performed in the same time period as or shorter time period than the current time period, and ends the process without updating the optimum packet length in the time table 142.

If the past cumulative time is longer than the calculated total time (Yes at step S211), the packet-length optimizing unit 153 surmises that the current data reading and transfer time period is shorter than in the past, and stores the calculated total time in the field past cumulative time associated with the packet length stored in the field optimum packet length of the time table 142 (step S212).

The packet-length optimizing unit 153 then proceeds to calculate a new packet length (step S213). Specifically, the packet-length optimizing unit 153 calculates the new packet length by dividing the current packet length by the preset constant m. The packet-length optimizing unit 153 stores the freshly calculated packet length in the field optimum packet length of the time table 142 (step S214). The packet-length optimizing unit 153 then proceeds to calculate the packet transfer count for the freshly calculated packet length and stores it in the field packet transfer count of the time table 142, and returns to step S201.

The data transfer process and the packet length optimization process explained with reference to Figs. 3 and 4, respectively, have been described above for the case when data is read and transferred from the shared memory 12. However, the same description holds for the case when data is to be read and transferred from the cache memory 13.

To enable reading and transferring data from the cache memory 13, a separate time table 142 corresponding to the cache memory 13 is required, so that when the shared memory 12 is to be accessed, data transfer and packet length optimization can be performed using the time table 142 corresponding to the shared memory 12 and when the cache memory 13 is to be accessed, data transfer and packet length optimization can be performed using the time table 142 corresponding to the cache memory 13.

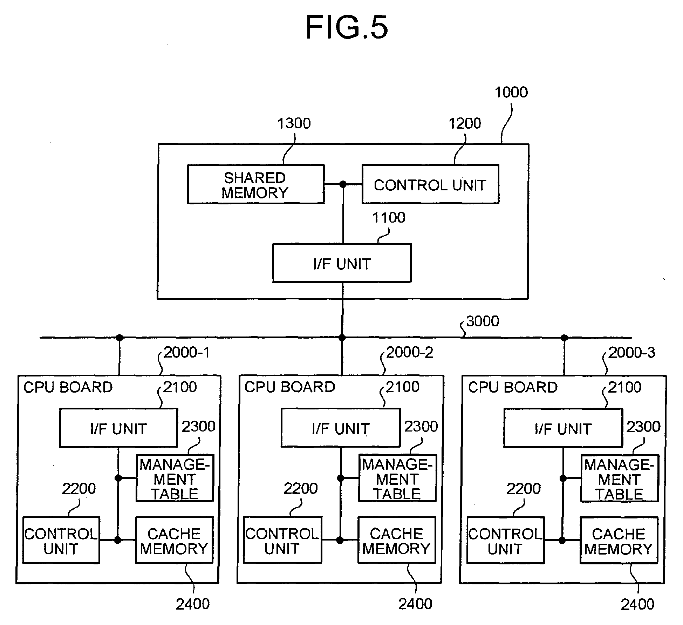

With reference to Figs. 5 to 8, data transfer by a conventional information processing system is compared with data transfer by the information processing system according to the present invention are compared in the following description by presenting a case where a data read request for data of 512 bytes in the shared memory 12 is issued by different CPU boards.

Fig. 5 is a drawing of a configuration of a conventional information processing system. The conventional information processing system includes a memory board 1000, a plurality of (three, in the example shown) CPU boards 2000-1 to 2000-3, all of which are connected to one another by a bus 3000.

The memory board 1000 includes an interface unit (hereinafter, "I/F unit") 1100, a shared memory 1300, and a control unit 1200. The I/F unit 1100 connects the memory board 1000 to the CPU boards 2000-1 to 2000-3 via the bus 3000. The shared memory 1300 stores therein data required for the processes performed by the CPU boards 2000-1 to 2000-3. The control unit 1200 accesses the shared memory 1300 in response to requests from the CPU boards 2000-1 to 2000-3, performs data read and write, and transfers the data read from the shared memory 1300 to the requesting CPU boards 2000-1 to 2000-3 via the I/F unit 1100. When transferring data to the requesting CPU boards 2000-1 to 2000-3, the control unit 1200 transfers the data in data packets of a preset data length.

Each of the CPU boards 2000-1 to 2000-3 includes an I/F unit 2100, a cache memory 2400, a management table 2300, and a control unit 2200. The I/F unit 2100 connects the CPU boards 2000-1 to 2000-3 to the memory board 1000 via the bus 3000. The cache memory 2400 stores therein part of the data stored in the shared memory 1300. The management table 2300 contains data such as memory address indicating the storage location and status of the data stored in the shared memory 1300, and memory addresses indicating the storage location and status of the data stored in the cache memory 2400 of the CPU boards 2000-1 to 2000-3 themselves. The control unit 2200 includes a not shown CPU and a storage unit storing therein programs executed by the CPU, and executes intended processes. Additionally, the control unit 2200 selects whether access request to the shared memory 1300 is to be processed by performing hit determination of the cache memory 2400 based on the management table 2300.

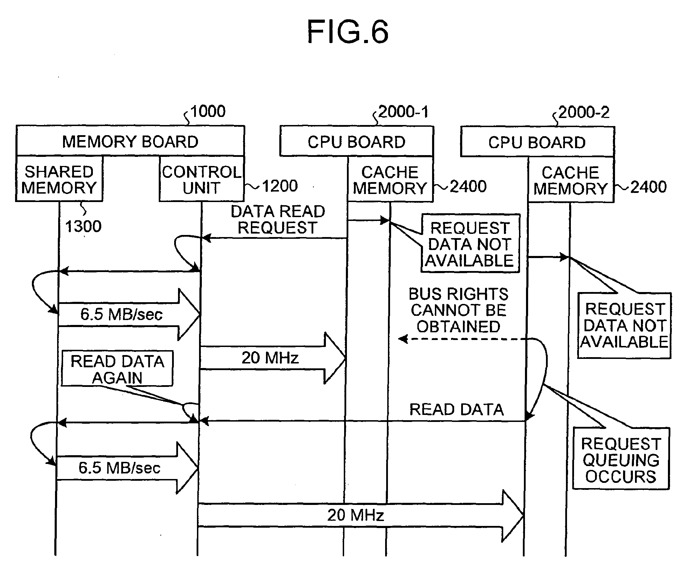

Fig. 6 is a schematic for explaining the functioning of the conventional information processing system. When the CPU board 2000-1 requests to access the data stored in the shared memory 1300, the control unit 2200 of the CPU board 2000-1 determines whether the required data is available in the cache memory 2400 based on the management table 2300. As shown in Fig. 6, as the required data is not available in the cache memory 2400, the control unit 2200 sends the data read request to the memory board 1000.

Upon receiving the data read request, the control unit 1200 of the memory board 1000 accesses the shared memory 1300 and reads the requested data at 6.5 MB/sec. The control unit 1200 sends the data read from the shared memory 1300 to the CPU board 2000-1 at 20 MHz.

Meanwhile, if the CPU board 2000-2 also requests to access the data stored in the shared memory 1300, the control unit 2200 of the CPU board 2000-2 determines whether the requested data is available in the cache memory 2400 based on the management table 2300. As shown in Fig. 6, as the requested data is not available in the cache memory 2400, the control unit 2200 sends the data read request to the memory board 1000. However, the CPU board 2000-1 exclusively owns the bus 3000 from the time the data read request is sent to the memory board 1000 until the time the requested data is received by the CPU board 2000-1. Consequently, the CPU board 2000-2 has to standby until the bus 3000 is freed.

Upon obtaining bus rights, the CPU board 2000-2 transmits the data read request to the memory board 1000. Upon receiving the data read request, the control unit 1200 of the memory board 1000 accesses the shared memory 1300 and reads the requested data at 6.5 MB/sec. In other words, the control unit 1200 once again reads from the shared memory 1300 the same data requested by the CPU board 2000-1. Thereafter, the control unit 1200 sends the data read from the shared memory 1300 to the CPU board 2000-2 at 20 MHz.

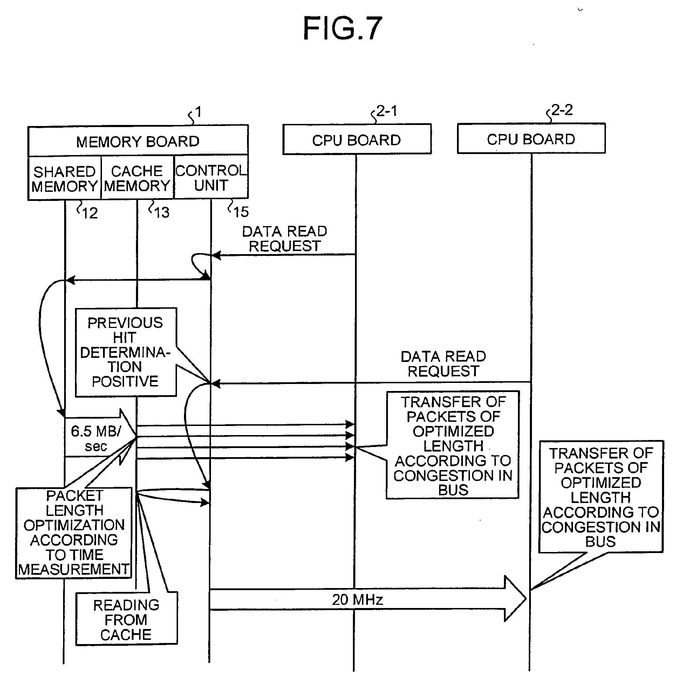

Fig. 7 is a schematic for explaining the functioning of the information processing system according to the present invention. To request to access the data stored in the shared memory 12, the CPU board 2-1 sends a data read request to the memory board 1. If the outcome of hit determination is a mishit, the control unit 15 of the memory board 1 accesses the shared memory 12, starts reading the data in packets of optimum packet length, storing the data in the cache memory 13, while at the same time performing data transfer process to send the data packet of optimum packet length to the CPU board 2-1. In addition, the control unit 15 of the memory board 1 performs the packet length optimization process.

Meanwhile, if the CPU board 2-2 requests to access the data stored in the shared memory 12, the reception of the data read request by the CPU board 2-2 is enabled as the bus 3 is freed when the control unit 15 of the memory board 1 is performing hit determination.

Once the transfer of data from the shared memory 12 is completed, the data requested by the CPU board 2-1 is now available in the cache memory 13 of the memory board 1. The management table 141 is also updated. If the data requested by the CPU board 2-2 is the same as the data requested by the CPU board 2-1, the outcome of hit determination by the control unit 15 will be a hit. Thus, the control unit 15 does not have to access the shared memory 12 as it can read the data from the cache memory 13 and send it to the CPU board 2-2.

Thus, in the conventional information processing system, if different CPU boards 2000-1 to 2000-3 request for the same data, the shared memory 1300 has to be accessed for the data read request from each of the CPU boards 2000-1 to 2000-3. In the information processing system according to the present invention, the shared memory 12 needs to be accessed only for the data read request from the CPU board that first sends the request. Thereafter, the requested data can be accessed in the cache memory 13, and for any subsequent request for the data by any other CPU board, only the cache memory 13 needs to be accessed. Generally, accessing the cache memory 13 takes far less time than accessing the shared memory 12. Thus, the information processing system according to the present invention takes less time processing a data read request than the conventional information processing system that accesses the shared memory 12 for every data read request.

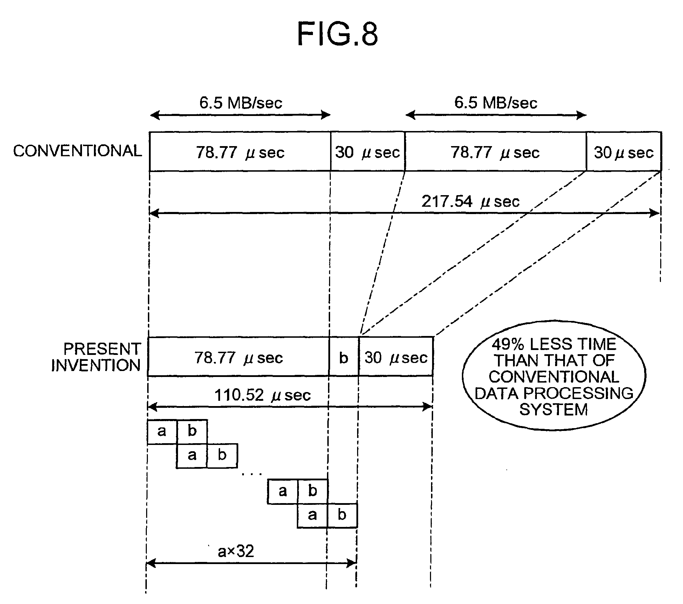

Fig. 8 is a schematic for comparing the processing time of the conventional information processing system and the information processing system according to the present invention. In the conventional information processing system, for processing the first data read request (from the CPU board 2000-1 shown in Fig. 6), approximately 78.77 $\mu$sec are required for reading a 512-byte data from the shared memory 1300 at 6.5 MB/sec, and approximately another 30 $\mu$sec are required for transferring the data to the CPU board 2000-1. Similarly, for processing the next data read request (from the CPU board 2000-2 shown in Fig. 6), once again approximately 78.77 $\mu$sec are required for reading a 512-byte data from the shared memory 1300 at 6.5 MB/sec, and approximately another 30 $\mu$sec are required for transferring the data to the CPU board 2000-2. Thus, the total time of approximately 217.54 $\mu$sec are required for reading and transferring data from the same address in response to data read requests from two different CPU boards 2000-1 and 2000-2.

On the contrary, in the information processing system according to the present invention, if the optimum packet length is 16 bytes and the packet read time is longer than the packet transfer time, the total time required for reading the 512-byte data from the shared memory 12 and transferring the data in response to the first data read request (from the CPU board 2-1 shown in Fig. 7) would be (a $\times$ 32) + b, where a is the packet read time and b is the packet transfer time. If the packet read time a is approximately 2.4 $\mu$sec, and the packet transfer time b is approximately 1.75 $\mu$sec, the total time would be approximately 80.47 $\mu$sec. The total data read time, which is a$\times$32, is substantially the same as the data read time of the conventional information processing system from the shared memory 12. Therefore, the total time in response to the first data read request is shorter by (30 - b) $\mu$sec, that is, by 28.25 $\mu$sec.

In response to the data read request (from the CPU board 2-2 shown in Fig. 7), the information processing system reads the requested data by accessing the cache memory 13 instead of the shared memory 12 and transfers the data. Accessing the cache memory 13 takes far less time than accessing the shared memory 12. Even if the transfer of data is done as in the conventional information processing system, the data can be transferred in approximately 30 μsec. Thus reading and transferring of the same data in response to requests from two different CPU boards can be completed in 110.52 μsec. Thus, the time taken by the information processing system according to the present invention to complete the task is 49% less than that of the conventional information processing system.

Thus, in the present embodiment, the memory board 1 has the control-data storage unit 14 that stores therein the time table 142, the time table 142 containing, in an associated form with each of a plurality of preset packet lengths, data such as packet read time, past cumulative time, optimum packet length, and packet transfer count. The packet read time is the time required for reading a packet of optimum packet length from the shared memory 12. The past cumulative time is the time that was required in the past to read the requested data from the shared memory 12 until completion of transfer of the requested data. The optimum packet length is the length of the packet used in data transfer. The packet transfer count is the number of times the packet of optimum packet length needs to be transferred to transfer the entire requested data. The data transferring unit 152 of the memory board 1 reads the data in packets of optimum packet length from the shared memory 12 and sequentially transfers the packets sequentially in such a way that the previous packet is transferred while the next packet is read. In addition, the data transferring unit 152 measures the packet transfer time, which is the time taken for the transfer of a packet from the beginning of transfer to its completion. The packet-length optimizing unit 153 of the memory board 1 calculates the total time, which is the time required to read the requested data in packets of optimum packet length and transfer the packets to the requesting CPU board until all the packets are transferred, using two different formulae depending on whether the packet read time is longer or the packet transfer time is longer. If the packet read time is longer, the packet-length optimizing unit 153 calculates the total time by multiplying the packet read time and the packet transfer count, and adding the packet transfer time to the product. If the packet transfer time is longer, the packet-length optimizing unit 153 calculates the total time by multiplying the packet transfer time and the packet transfer count, and adding the packet read time to the product. The packet-length optimizing unit 153 stores the a fresh optimum packet length obtained by multiplying the current optimum packet length with a preset constant in the field optimum packet length of the time table 142, and the transfer count for the fresh optimum packet length in the field transfer count of the time table 142. In other words, the packet-length optimizing unit 153 varies the packet length so that the difference between the time required for the simultaneously performed processes of packet reading and packet transferring is minimized.

Thus, by reducing the duration of reading and transferring the data from the shared memory 12, the information processing system keeps the bus 3 engaged for shorter duration, making it more readily available to other CPU boards 2-1 to 2-3.

Further, in the present embodiment, the memory board 1 includes the shared memory 12 and the cache memory 13. The memory board 1 performs hit determination to check if the data requested by the CPU boards 2-1 to 2-3 is available in the cache memory 13. If the data is available in the cache memory 13, the data is read from the cache memory 13 in units of packets and sequentially transferred to the requesting CPU board. If the requested data is not available in the cache memory 13, the requests are queued and executed sequentially, from the oldest to the latest. When executing each request, hit determination is performed once again to check if the requested data is available in the cache memory 13. If the requested data is available in the cache memory 13, the data is read from the cache memory 13 in units of packets and sequentially transferred to the requesting CPU board. If the requested data is not available in the cache memory 13, the data is read from the shared memory 12 in units of packets and sequentially transferred. Consequently, apart from performing packet length optimization during data transfer, the information processing system cuts down the data read time by reading the data from the shared memory 12 only for the first request from the CPU boards 2-1 to 2-3, and enabling data to be read from the cache memory 13 in response to subsequent requests for the CPU boards 2-1 to 2-3. As a result of reduced data read time, the waiting period for the other CPU boards 2-1 to 2-3 to obtain usage rights over the bus 3 is also reduced.

In the present embodiment, there is only one time table 142 for the shared memory 12. However, one time table 142 for each of the CPU boards 2-1 to 2-3 can be provided, so that the time table 142 of the respective requesting CPU boards 2-1 to 2-3 can be used in the data transfer process and packet length optimization process.

The memory board 1 and the CPU boards 2-1 to 2-3 are interconnected in the present embodiment by a path-type topology. However, other types of topology such as star-type can also be used.

In the present embodiment, the cache memory 13 is provided in the memory board 1. However, even if the cache memory 13 is provided in each of the CPU boards 2-1 to 2-3 as in the conventional information processing system, the memory board 1 can be configured to perform the data transfer process and the packet length optimization process according to the present invention when transferring data from the shared memory 12.

According to an embodiment of the present invention, consequently, packet length optimization performed during data transfer cuts down the waiting period to obtain bus rights.

According to an embodiment of the present invention, when read requests are received by different processing modules for the same data, the shared memory is accessed only once for the read request by the first processing module. The data can be retrieved subsequently from the cache memory in response to read request from other processing modules. Consequently, data read time and waiting period for obtaining bus rights can be cut down. In addition to packet length optimization performed during data transfer.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

**Claims**

1.  A data transferring apparatus connected to a plurality of processing modules by a bus, the data transferring apparatus comprising:

    a storage unit that stores therein data required by the processing modules; and
    a control unit that, upon receiving a request of data from one of the processing modules, reads the requested data from the storage unit in packets each having an optimum packet length and sequentially transfers the packets in such a way that the previous packet is transferred while the next packet is read, the control unit setting the optimum packet length based on a packet transfer time.

2.  The data transferring apparatus according to claim 1, further comprising a control-data storage unit that stores therein a time table that contains packet read time, past cumulative time, the optimum packet length, and packet transfer count, wherein the packet read time is the time required for reading a packet of a preset packet length from the storage unit, the past cumulative time is the time having been required in the past for processing from the start of reading the requested data from the storage unit to the completion of transferring the requested data, the optimum packet length is a length of the packet used in data transfer, and the packet transfer count is the number of times the packet of optimum packet length needs to be transferred to transfer the entire requested data,
    wherein the control unit further includes,

    a data transferring unit that reads the requested data from the storage unit in the packets of optimum packet length stored in the time table and sequentially transfers the packets in such a way that the previous packet is transferred while the next packet is read, as well as measures packet transfer time that is the time from the start to the completion of packet transfer, and
    a packet-length optimizing unit that calculates a total transfer time, based on (1) the packet read time and the packet transfer count which are stored in the time table associated with the optimum packet length and (2) the packet transfer time measured by the data transferring unit, and, if the calculated total transfer time is shorter than the past cumulative time stored in the time table, varies the optimum packet length stored in the time table so that a difference between the packet read time and the measured packet transfer time is minimized.

3.  The data transferring apparatus according to claim 2, wherein the packet-length optimizing unit calculates, if the packet read time is longer than the packet transfer time, the total transfer time by adding the packet transfer time to a product of the packet read time and the packet transfer count, and stores, as the optimum packet length, a value obtained by dividing the current packet length by a preset constant in the time table, and
    the packet-length optimizing unit calculates, if the packet transfer time is longer than the packet read time, the total transfer time by adding the packet read time to a product of the packet transfer time and the packet transfer count, stores, as the optimum packet length, a value obtained by multiplying the current packet length with a preset constant in the time table, and stores, as the packet transfer count, the number of times the packet of the stored optimum packet length needs to be transferred to transfer the entire requested data, in the time table.

4.  An information processing system comprising:

    a plurality of processing modules each performing various processes; and
    a data transferring apparatus that includes a storage unit that stores therein data required by the processing modules, and is connected to the processing modules, wherein the data transferring apparatus further includes a control unit that, upon receiving a request of data from one of the processing modules, reads the requested data from the storage unit in packets each having an optimum packet length and sequentially transfers the packets in such a way that the previous packet is transferred while the next packet is read, the control unit setting the optimum packet length based on a packet transfer time.

5. The information processing system according to claim 4,
   wherein the storage unit includes,

   a shared memory that stores therein all the data required by the processing module, and
   a cache memory that stores therein a part of the data stored in the shared memory,

   wherein the control unit performs hit determination to determine whether the data requested by the processing module is available in the cache memory, and the control unit reads, if the data requested by the processing module is available in the cache memory, the data in packets sequentially transferring the packets from the cache memory to the requesting processing module, and temporarily queues, if the requested data is not available in the cache memory, the request from the processing module and performs the hit determination again for the queued request from an oldest request to a latest request, wherein the control unit reads, if the requested data is available in the cache memory, the data in packets sequentially transferring the packets from the cache memory to the requesting processing module, and reads, if the requested data is not available in the cache memory, the data in packets sequentially transferring the packets from the shared memory to the requesting processing module.

# FIG.1

CONVENTIONAL

| DATA READING (x BYTES) | DATA TRANSFER (x BYTES) |

PRESENT INVENTION

PACKET READING (a BYTES)
PACKET TRANS-FER (a BYTES)

PACKET READING (a BYTES)
PACKET TRANS-FER (a BYTES)

PACKET READING (a BYTES)
PACKET TRANS-FER (a BYTES)

PACKET READING (a BYTES)
PACKET TRANS-FER (a BYTES)

PACKET READING (a BYTES)
PACKET TRANS-FER (a BYTES)

# FIG.2

# FIG.3

```
                    ┌──────────────┐
                    │    START     │
                    └──────┬───────┘
                           ↓
              ┌─────────────────────────┐
              │ RECEIVE DATA READ REQUEST│──S101
              └────────────┬────────────┘
                           ↓ S102
              ╱─────────────────────────╲        NO
             ╱   IS REQUESTED DATA        ╲──────────────────┐
             ╲   AVAILABLE IN CACHE       ╱                  │
              ╲   MEMORY?                ╱                   ↓
               ╲────────────┬──────────╱          ┌──────────────────────┐
                            │YES                  │     KEEP COMMAND     │──S105
                            │                     └──────────┬───────────┘
                            │                                ↓ S106
                            │                     ┌──────────────────────┐
                            │                     │     READ COMMAND     │
                            │                     └──────────┬───────────┘
                            │                                ↓ S107
                            │              YES    ╱─────────────────────────╲
                            │      ┌─────────────╱   IS REQUESTED DATA       ╲
                            │      │             ╲   AVAILABLE IN CACHE       ╱
                            │      │              ╲   MEMORY?                ╱
                            │      │               ╲──────────┬───────────╱
                            │      │                          │NO
                S108        ↓      │                          ↓
   ┌──────────────────────────┐   │       ┌──────────────────────────────────┐
   │ EXTRACT DATA FROM CACHE   │   │       │ READ PACKET LENGTH AND PACKET     │
   │        MEMORY            │──S103      │ TRANSFER COUNT FROM TIME TABLE    │
   └────────────┬─────────────┘   │       └──────────────┬───────────────────┘
                ↓ S104            │                       ↓ S109
   ┌──────────────────────────┐   │       ┌──────────────────────────────────┐
   │      TRANSFER DATA       │   │       │      RESET TRANSFER COUNT        │
   └────────────┬─────────────┘   │       └──────────────┬───────────────────┘
                │                 │                       ↓ S110
                │                 │       ┌──────────────────────────────────┐
                │                 │       │ EXTRACT DATA OF OPTIMUM PACKET    │
                │                 │       │ LENGTH FROM SHARED MEMORY        │
                │                 │       └──────────────┬───────────────────┘
                │                 │                      ↓ S111
                │                 │       ┌──────────────────────────────────┐
                │                 │       │       TRANSFER PACKET            │
                │                 │       └──────────────┬───────────────────┘
                │                 │                      ↓ S112
                │                 │       ┌──────────────────────────────────┐
                │                 │       │        STORE DATA               │
                │                 │       └──────────────┬───────────────────┘
                │                 │                      ↓ S113
                │                 │       ┌──────────────────────────────────┐
                │                 │       │  INCREMENT TRANSFER COUNT        │
                │                 │       └──────────────┬───────────────────┘
                │                 │                      ↓ S114
                │                 │       ╱─────────────────────────────╲
                │                 │  NO  ╱     TRANSFER                   ╲
                │                 │ ─────╲   COUNT VALUE>                 ╱
                │                 │       ╲ PACKET TRANSFER              ╱
                │                 │        ╲   COUNT?                   ╱
                │                 │         ╲──────────┬──────────────╱
                │                 │                    │YES  S115
                │                 │       ┌──────────────────────────────────┐
                │                 │       │   UPDATE MANAGEMENT TABLE        │
                │                 │       └──────────────────────────────────┘
                ↓                 │
         ┌──────────────┐
         │     END      │
         └──────────────┘
```

# FIG.4

```
                    START

        RETRIEVE READ TIME FROM
         SHARED MEMORY
         CORRESPONDING TO              S201
        CURRENT OPTIMUM PACKET
              LENGTH

        CALCULATE PACKET              S202
         TRANSFER TIME

                                S203
              READ                              NO
          TIME>TRANSFER
              TIME?                                              S209
                                                    TRANSFER TIME>
              YES    S204                NO           READ TIME?
        TOTAL TIME=
         {(READ TIME) ×                                   YES    S210
        (PACKET TRANSFER                            TOTAL TIME=
           COUNT)}+                              (READ TIME)+{(PACKET
        (PACKET TRANSFER TIME)                   TRANSFER TIME) ×
                                                (PACKET TRANSFER COUNT)}
                        S205
              PAST                                            S211
          CUMULATIVE TIME>    NO                       PAST
          CALCULATED TOTAL                        CUMULATIVE TIME>
              TIME?                               CALCULATED TOTAL      NO
                                                      TIME?
              YES    S206
        ENTER CALCULATED TOTAL                             YES    S212
         TIME IN FIELD PAST                        ENTER CALCULATED TOTAL
        CUMULATIVE TIME IN TIME                      TIME IN FIELD PAST
              TABLE                                 CUMULATIVE TIME IN TIME
                                                          TABLE
                        S207
        CALCULATE NEW PACKET                                     S213
              LENGTH                              CALCULATE NEW PACKET
        (NEW PACKET LENGTH=                             LENGTH
        CURRENT PACKET LENGTH/m)                   (NEW PACKET LENGTH=
                                                   CURRENT PACKET
                        S208                         LENGTH × m)
        ENTER NEW PACKET LENGTH
         IN FIELD OPTIMUM PACKET                                 S214
        LENGTH IN TIME TABLE                      ENTER NEW PACKET LENGTH
                                                  IN FIELD OPTIMUM PACKET
                                                  LENGTH IN TIME TABLE


                           END
```

15

# FIG.5

# FIG.6

# FIG.7

# FIG.8

CONVENTIONAL

6.5 MB/sec — 6.5 MB/sec

| 78.77 $\mu$ sec | 30 $\mu$ sec | 78.77 $\mu$ sec | 30 $\mu$ sec |

217.54 $\mu$ sec

PRESENT INVENTION

| 78.77 $\mu$ sec | b | 30 $\mu$ sec |

110.52 $\mu$ sec

49% LESS TIME THAN THAT OF CONVENTIONAL DATA PROCESSING SYSTEM

a×32

| | European Patent Office | EUROPEAN SEARCH REPORT | Application Number<br>EP 08 00 2884 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/112199 A1 (SONKSEN BRADLEY S [US] ET AL) 25 May 2006 (2006-05-25)<br>* paragraphs [0003], [0005], [0011] *<br>* paragraphs [0017], [0019] *<br>* figures 1A,3 *<br>----- | 1,4,5 | INV.<br>G06F13/16 |
| A | US 6 615 308 B1 (FANNING BLAISE B [US]) 2 September 2003 (2003-09-02)<br>* the whole document *<br>----- | 1,4 | |

**TECHNICAL FIELDS SEARCHED (IPC)**

G06F

The present search report has been drawn up for all claims

| Place of search | Date of completion of the search | Examiner |
|---|---|---|
| Munich | 21 July 2008 | van der Meulen, E |

EPO FORM 1503 03.82 (P04C01)

**ANNEX TO THE EUROPEAN SEARCH REPORT
ON EUROPEAN PATENT APPLICATION NO.**

EP 08 00 2884

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2008

| Patent document cited in search report | | Publication date | Patent family member(s) | | Publication date |
|---|---|---|---|---|---|
| US 2006112199 | A1 | 25-05-2006 | WO | 2006057841 A1 | 01-06-2006 |
| US 6615308 | B1 | 02-09-2003 | NONE | | |

EPO FORM P0459

For more details about this annex : see Official Journal of the European Patent Office, No. 12/82

**REFERENCES CITED IN THE DESCRIPTION**

**Patent documents cited in the description**

- JP H7225737 B

- JP H7282023 B